# EUROPEAN PATENT APPLICATION

(11) **EP 1 857 321 A2**
(43) Date of publication of application: **21.11.2007**
(21) Application number: 07008893.5
(22) Date of filing: 02.05.2007
(51) Int. Cl.: B60N 2/68

(54) **Seat structure**

(30) Priority: 18.05.2006 JP 2006139251; 18.05.2006 JP 2006139006
(71) Applicant: NISSAN MOTOR CO., LTD., Yokohama-shi Kanagawa-ken (JP)
(72) Inventor: Ikai, Toshihisa, Atsugi-shi Kanagawa 243-0192 (JP); Udagawa, Mitsugu, Atsugi-shi Kanagawa 243-0192 (JP); Makino, Kiyoyuki, Atsugi-shi Kanagawa 243-0192 (JP)
(74) Representative: Grünecker, Kinkeldey, Stockmair & Schwanhäusser Anwaltssozietät

(57) **Abstract**

A seat structure includes a board that has a portion rolled up (10, 10A, 11, 11A) on a periphery of the board (6, 7). The portion rolled up (10, 10A, 11, 11A) has a closed cross section with a generally polygonal cross sectional profile.

## Description

### BACKGROUND OF THE INVENTION

### Related co-pending applications

The present application claims the benefit of priority from Japanese Patent Application No. 2006-139006, filed May 18, 2006, the disclosure of which is hereby incorporated by reference in its entirety, and it also claims the benefit of priority from Japanese Patent Application No. 2006-139251, filed May 18, 2006, the disclosure of which is hereby incorporated by reference in its entirety.

### Field of the invention

The present invention relates to a seat structure having a seat cushion and a seat back, at least one of which has a framework in the form of a board that has, as a frame, a portion rolled up on a periphery of the board.

### Description of related art

There is known from Japanese Registered Utility Model No. 2602770, a seatback, which is used in a seat, in particular, a vehicle's seat, having a framework in the form of a board. The board has a frame formed by bending and rolling up edge portions into a ringed pipe by a curling process.

In the above-mentioned conventional seat structure, an accessory attached to the seat such as a buckle of a seat belt or a buckle of a leg portion will be installed to a seat cushion. However, it is difficult to install the accessory to the board directly from a point of hardness and strength. Therefore, the accessory will be installed to the portion rolled up into the ringed pipe.

Because, with this known seat structure, the portion rolled up defines a closed cross section with circular cross sectional profile, if the accessory is installed to the portion rolled up, the accessory turns easily by external force and the like.

In the before-mentioned conventional seat structure, a pad formed with a cushion is implemented on one surface of the board. On implementing the pad, a groove of the pad receives the portion rolled up into the ringed pipe.

Because, with this known seat structure, the portion rolled up has a circular cross sectional profile, when the pad tends to slip on the board due to a lateral acceleration during cornering of a vehicle, for example, the groove of the pad easily runs onto the portion rolled up, permitting a slippage between the pad and the board. On this account, the pad slips sidewise and rubs against the board, causing abnormal noise to occur, providing a seat of low value.

Accordingly, an object of the present invention is to provide a seat structure that restrains outbreak of relative movement of a peripheral, including such accessory and pad, to a framework.

In specific, an object of the present invention is to provide a seat structure that surely maintains an initial installation state of a peripheral such as an accessory by preventing the accessory from moving from the initial installation position.

In specific, an object of the present invention is to provide a seat structure that restrains outbreak of abnormal noise by preventing slippage of a pad.

### SUMMARY OF THE INVENTION

According to one embodiment of the present invention, there is provided a seat structure comprising a board that has a portion rolled up on a periphery of the board, said portion rolled up having a closed cross section with a generally polygonal cross sectional profile.

### BRIEF DESCRIPTION OF THE DRAWINGS

Fig. 1 is a perspective exploded view of a seat structure.

Fig. 2 is a fragmentary sectional view showing a pad and a board.

Fig. 3A to Fig. 3G illustrate processes to form a portion rolled up of a board.

Fig. 4 is a fragmentary plan view of a board with a portion rolled up unfolded.

Fig. 5 is a perspective view of a front leg bracket installed to a board.

Fig. 6 is a section through Fig. 5 along the line VI-VI.

Fig. 7 is a perspective view of a rear leg bracket installed to a board.

Fig. 8 is a section through Fig. 7 along the line VIII-VIII.

Fig. 9 is a section similar to Fig. 8 illustrating installation of a tether belt anchor.

Fig. 10 is a combination of two sections through Fig. 11 along two appropriate lines to illustrate installation of a belt guide and a belt in contact with the belt guide.

Fig. 11 is a perspective view of the installation of the belt guide and actual arrangement of the belt with the belt guide.

Fig. 12 is a fragmentary perspective view of a portion rolled up of a board.

Fig. 13 is a section similar to Fig. 8 illustrating installation a leg bracket to the portion rolled up shown in Fig. 12.

Fig. 14 is an exploded view of the seat structure shown in Fig. 1 without the pads.

Fig. 15 is a diagram illustrating the relationship of end faces of each of contour sections of a portion rolled up.

Fig. 16 is an exploded view a headrest holder.

Fig. 17 is a perspective view of a modified seat structure.

### DETAILED DESCRIPTION OF THE INVENTION

### (First Embodiment)

Referring to the accompanying drawings, there is a description of a seat structure, exemplifying, for a vehicle seat, a rear bench seat for a minivan to be concrete.

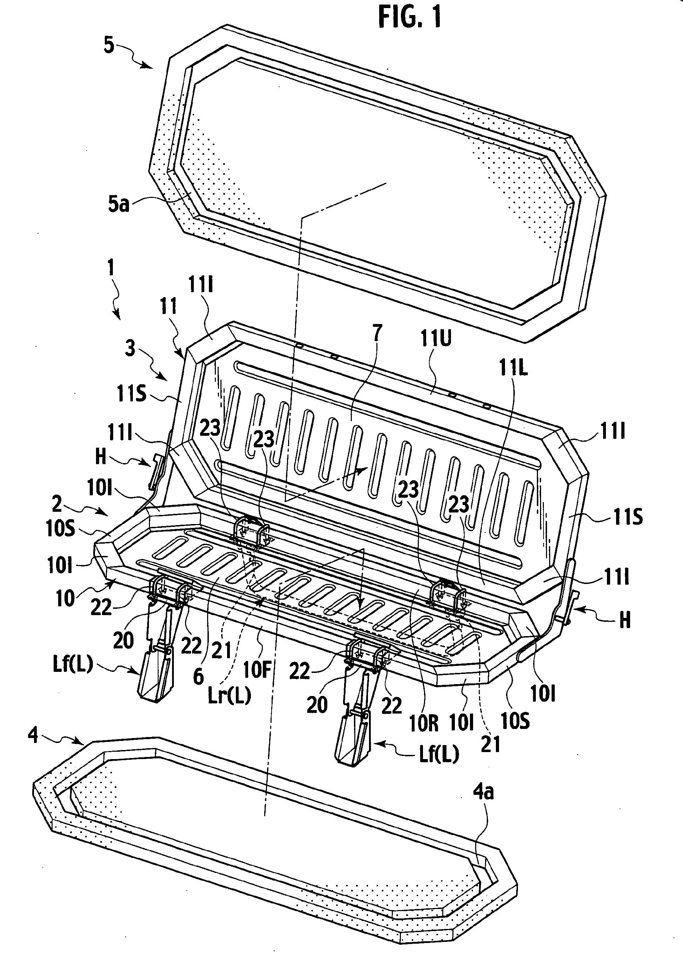

Referring to Fig. 1, the rear bench seat is designated at 1. The rear bench seat 1 includes a seat cushion 2 and a seat back 3. The seat cushion 2 and seat back 3 are connected to each other via a hinge H. The seat cushion 2 is supported on a vehicle floor via legs L. When not in use, the rear bench seat 1 is folded and can be stored on a back side of a front seat, not illustrated.

The legs L include a pair of right and left front legs Lf, and a rear leg Lr. The front legs Lf are installed to a front, with respect to the vehicle longitudinal line, portion of the seat cushion 2 at laterally spaced right and left sites. At a point between an upper end and a lower end of each of the front legs Lf, it is possible to bend the front legs Lf. The rear leg Lr is in the form of U character and installed to a rear, with respect to the vehicle longitudinal line, portion of the seat cushion 2. At upper ends of the U character, the rear leg Lr is pivotable to the rear portion of the seat cushion 2.

The seat cushion 2 includes a pad 4 and a board 6 as a framework, while, the seat back 3 includes a pad 5 and a board 7 as a framework. The pad 4 will be implemented on one surface of the board 6, while the pad 5 will be implemented on one surface of the board 7. The board 6 has, as a frame, a portion rolled up 10 on the periphery. On implementing the pad 4, a groove 4a of the pad 4 receives the portion rolled up 10. The board 7 has, as a frame, a portion rolled up 11 on the periphery. On implementing the pad 5, a groove 5a of the pad 5 receives the portion rolled up 11.

The seat cushion 2 is formed in the shape of a generally rectangle that is lengthened in width to make a seat for 2 to 3 people. The portion rolled up 10 is formed by bending and rolling up all the edge portions of the board 6 that is made of a material, which is easily bent, such as aluminum alloy. In addition, the board 6 is raised in surface hardness by giving embossing appropriately.

On the other hand, the pad 4 for the seat cushion 2 has a predetermined thickness over the whole plan view contour of the board 6 that is formed with the portion rolled up 10. The lower surface of the pad 4 is formed with the groove 4a that is ringed.

Like the seat cushion 2, the seat back 3 is formed in the shape of a generally rectangle that is lengthened in width. The portion rolled up 11 is formed by bending and rolling up all the edge portions of the board 7 that is made of a material, which is easily bent, such as aluminum alloy. In addition, the board 7 is raised in surface hardness by giving embossing appropriately.

On the other hand, the pad 5 for the seat back 3 has a predetermined thickness over the whole plan view contour of the board 7 that is formed with the portion rolled up 11. The lower surface of the pad 5 is formed with the groove 5a that is ringed.

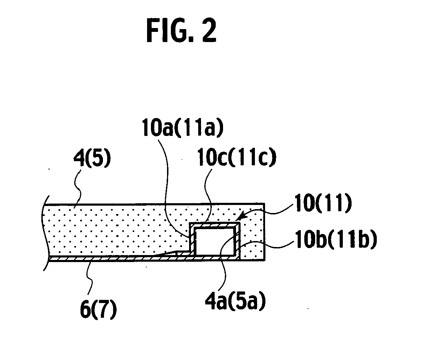

By fitting the portion rolled up 10 into the groove 4a as shown in Fig. 2, the pad 4 is implemented to the surface of the board 6 for the seat cushion 2. Likewise, by fitting the portion rolled up 11 into the groove 5a as shown in Fig. 2, the pad 5 is implemented to the surface of the board 7 for the seat back 3.

As is readily seen from Fig. 1 to Fig. 4, the portion rolled up 10 for the seat cushion 2 extends over the whole plan view contour of the board 6, and includes a front contour section 10F, two side contour sections 10S and 10S, and a rear contour section 10R. In a similar manner, the portion rolled up 11 for the seat back 3 extends over the whole front elevation contour of the board 7, and includes an upper contour section 11U, two side contour sections 11S and 11S, and a lower contour section 11 L.

In order to round off corners of the board 6 for the seat cushion 2, the portion rolled up 10 also includes four slanting contour sections 10I, a first one 10I slanting for and interconnecting the front contour section 10F and the adjacent side contour section 10S on the right, a second one 10I slanting for and interconnecting this side contour section 10S on the right and the adjacent rear contour section 10R, a third one 10I slanting for and interconnecting the rear contour section 10R and the adjacent side contour section 10S on the left, and a fourth one 10I slanting for and interconnecting this side contour section 10S on the left and the front contour section 10F. In a similar manner, in order to round off corners of the board 7 for the seat back 3, the portion rolled up 11 also includes four slanting contour sections 11I, a first one 11I slanting for and interconnecting the upper contour section 10U and the adjacent side contour section 11 S on the right, a second one 11I slanting for and interconnecting this side contour section 11 S on the right and the adjacent lower contour section 11L, a third one 11I slanting for and interconnecting the lower contour section 11 L and the adjacent side contour section 11 S on the left, and a fourth one 11I slanting for and interconnecting this side contour section 11 S on the left and the upper contour section 11U.

The front legs Lf are installed to the front contour section 10F via front brackets 81. On the other hand, the rear leg Lr is installed to the rear contour section 10R via a rear bracket 21.

As best seen in Fig. 2, the portion rolled up 10 defines a closed cross section having a generally polygonal cross sectional profile, and the portion rolled up 11 defines a closed cross section having a generally polygonal cross sectional profile. In the present embodiment, the cross sectional profile of each of the cross sections of the portions rolled up 10 and 11 is rectangular as an example of the generally polygonal cross sectional profile without any intention to limit the invention to the rectangular cross sectional profile. With the portion rolled up 10 having a generally polygonal cross sectional profile and the portion rolled up 11 having a generally polygonal cross sectional profile, the seat structure 1 can restrain outbreak of abnormal noise by preventing slippage of each of pads 4 and 5 when the pads 4 and 5 tend to slip on the boards 6 and 7 due to a lateral acceleration during, for example, cornering of a vehicle.

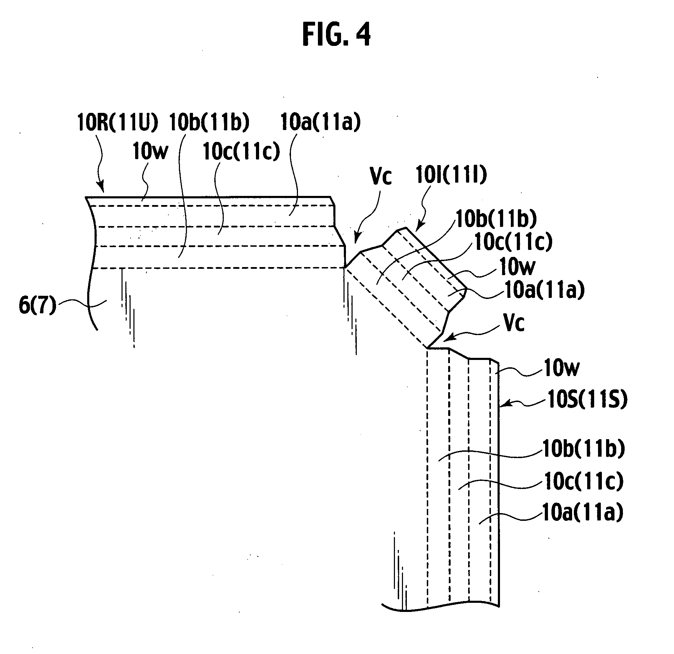

Fig. 4 shows the portion rolled up 10 and the portion rolled up 11 unfolded. Each of these portions rolled up 10 and 11 results by bending the board 6 or 7 to form sides of a rectangular cross section one after another at every one of predetermined inward lines from the outer extremity. Each of such predetermined inward lines is illustrated by a broken line in Fig. 4.

Referring to Fig. 2, the portion rolled up 10 has a peripheral wall including an inner peripheral wall portion 10a, an outer peripheral wall portion 10b, and a surface peripheral wall portion 10c interconnecting the inner and outer peripheral wall portions 10a and 10b. The portion rolled up 11 has a peripheral wall including an inner peripheral wall portion 11a, an outer peripheral wall portion 11b, and a surface peripheral wall portion 11c interconnecting the inner and outer peripheral wall portions 11a and 11b. Fig. 4 shows the inner, outer and surface peripheral wall portions 10a, 10b and 10c when the portion rolled up 10 is unfolded or the inner, outer and surface peripheral wall portions 11a, 11b and 11c when the portion rolled up 11 is unfolded. In Fig. 4, at the illustrated broken lines, the outer, surface and inner peripheral wall portions 10b (or 11b), 10c (or 11c) and 10a (or 11a) are connected one after another.

Referring continuously to Fig. 4, for the seat cushion 2, the board 6 is formed with generally V character cuts Vc, one between the area portion which will form each of slanting contour sections 10I and the adjacent area portion which will form the adjacent one of side contour sections 10S, another between the area portion which will form each of slanting contour sections 10I and the adjacent area portion which will form the adjacent one of the front and rear contour sections 10F and 10R. For the seat back 3, the board 7 is formed with generally V character cuts Vc, one between the area portion which will form each of slanting contour sections 11I and the adjacent area portion which will form the adjacent one of side contour sections 11S, another between the area portion which will form each of slanting contour sections 11I and the adjacent area portion which will form the adjacent one of the upper and lower contour sections 11U and 11L. For those two of the V character cuts Vc which interpose between them one of the side, front and rear contour sections 10S, 10F and 10R of the portion rolled up 10, the edges of these two V character cuts Vc form longitudinal ends of the one contour section 10S or 10F or 10R of the portion rolled up 10. For those two of the V character cuts Vc which interpose between them one of the side, upper and lower contour sections 11S, 11U and 11 L of the portion rolled up 11, the edges of these two V character cuts Vc form longitudinal ends of the one contour section 11S or 11 U or 11 L of the portion rolled up 11.

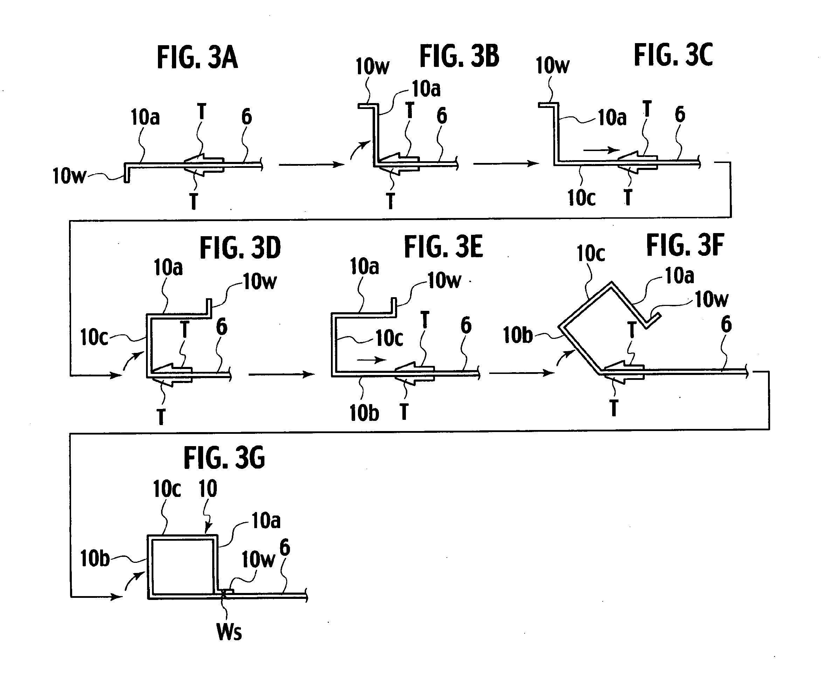

Here, referring to Fig. 3A to Fig. 3G, formation processes for the side contour section 10S, for example, are described for understanding of formation processes for each of portions rolled up 10 and 11. First, in process shown in Fig. 3A, the board 6 is bent to give an edge 10w for welding. In process shown in Fig. 3B, with a fixture jig T interposing a predetermined line that will become a side line of the inner peripheral wall portion 10a, the board 6 is bent through an angle of 90 degrees about this predetermined line to form the inner peripheral wall portion 10a. In process shown in Fig. 3C, the fixture jig T is moved to interpose a predetermined line that will become a side line of the surface peripheral wall portion 10c. In process shown in Fig. 3D, the board 6 is bent through an angle of 90 degrees about this predetermined line interposed by the fixture jig T. In Fig. 3E, the fixture jig T is moved to interpose a predetermined line that will become a side line of the outer peripheral wall portion 10b. In process shown in Fig. 3F, the board 6 begins to be bent, and, in process shown in Fig. 3G, the board 6 is bent through an angle of 90 degrees to form the outer peripheral wall portion 10b. In this stage, the side contour section 10S defines a cross section having a rectangular cross sectional profile, and the edge 10w is spot welded to the board 6 at Ws.

These forming processes are equally applicable to formation of each of the front contour section 10F, rear contour section 10R, and slanting contour sections 10I of the board 6 for the seat cushion 2. These forming processes are equally applicable to formation of each of the upper contour section 11U, side contour sections 11S, slanting contour sections 11I, and lower contour section 11L.

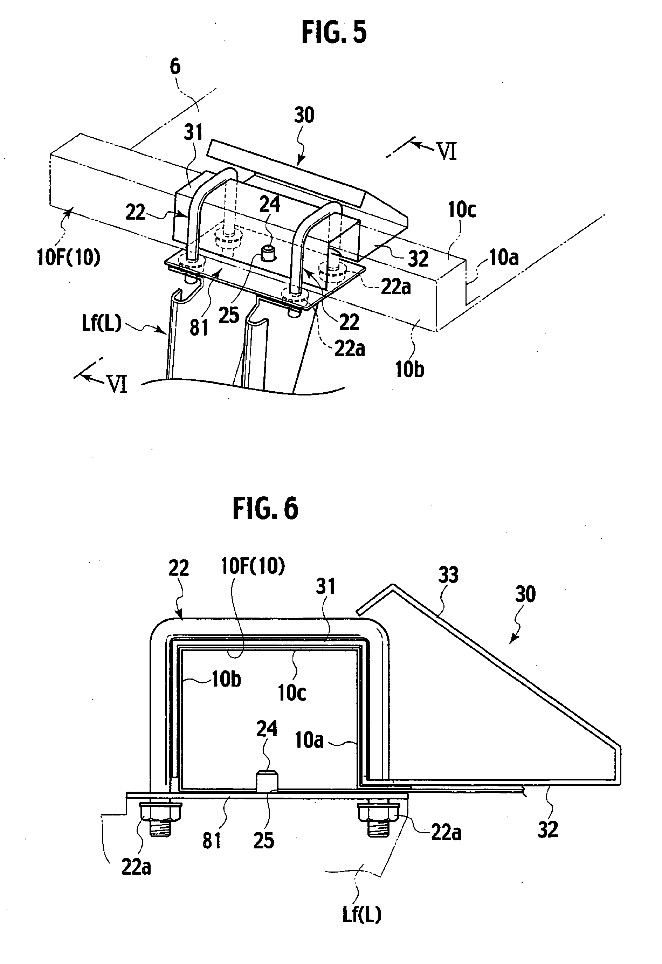

Referring to Fig. 5 and Fig. 6, upon installing each of the front legs Lf to the front contour section 10F of the board 6 for the seat cushion 2 via a front bracket 81, the front bracket 81 is installed to the front contour section 10F via a pair of front U bolts 22, each as an installation member of shape along outside shape of the front contour section 10F.

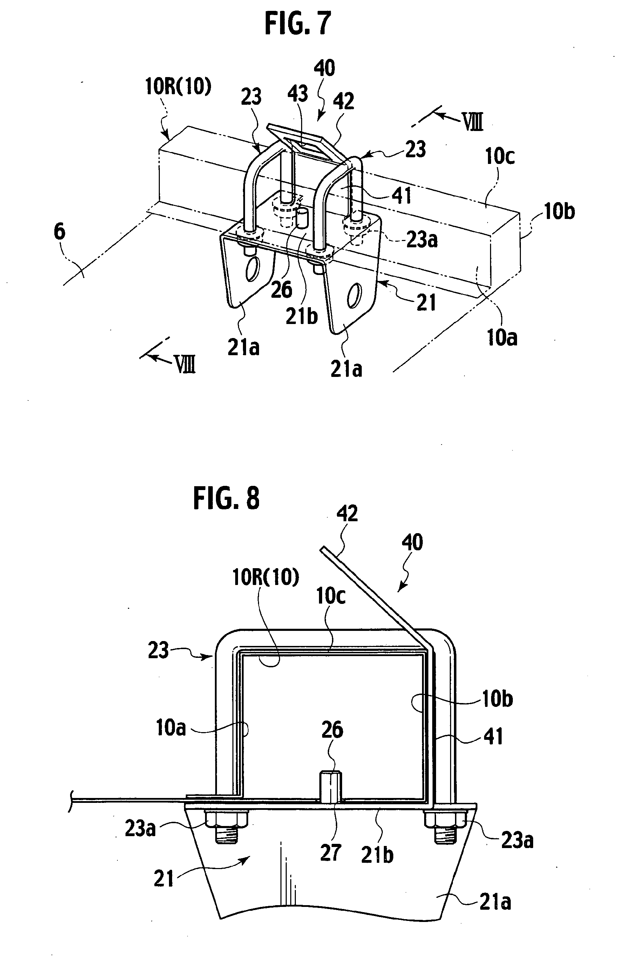

In addition, referring to Fig. 7 and Fig. 8, upon installing each of open ends of the U character of the rear leg Lr to the rear contour section 10R of the board 6 for the seat cushion 2 via a rear bracket 21, the rear bracket 21 is installed to the rear contour section 10R via a pair of rear U bolts 23, each as an installation member of shape along outside shape of the rear contour section 10R.

As shown in Fig. 5, the front bracket 81, which is a rectangular flat board, is connected to the upper end of the associated front leg Lf. As shown in Fig. 6, the front bracket 81 is arranged on the lower peripheral wall portion of the front contour section 10F, and each of the front U bolts 22 extends over the surface peripheral wall portion 10c of the front contour section 10F with its bottom end screw portions penetrating through the part of the front bracket 81 which projects beyond the outer peripheral wall portion 10b of the front contour section 10F and through the part of the front bracket 81 which projects beyond the inner peripheral wall portion 10a of the front contour section 10F, and the bottom end screw portions are tightened with nuts 22a upwards.

Then, a positioning pin 24, which projects from the central part of the upper surface of the front bracket 81 of the front leg Lf, is fit in a positioning hole 25, which is drilled through the lower peripheral wall portion of the front contour section 10F.

On the other hand, referring to Fig. 7, there is shown one of the rear brackets 21 that support shafts, not illustrated, carried by the upper open ends of the rear leg Lr. The rear bracket 21 is bent downwards at right and left end portions with a central rectangular flat board 21b left as it is. Two shaft supporting sections 21 a, which hang down from one and the opposite ends of the central rectangular flat board 21b, are formed with holes receiving the associated one of the shafts carried by the rear leg Lr. As shown in Fig. 8, the central rectangular flat board 21b is arranged on the lower peripheral wall portion of the rear contour section 10R, and each of the rear U bolts 23 extends over the surface peripheral wall portion 10c of the rear contour section 10R with its bottom end screw portions penetrating through the part of the rear bracket 21 which projects beyond the outer peripheral wall portion 10b of the rear contour section 10R and through the part of the rear bracket 21 which projects beyond the inner peripheral wall portion 10a of the rear contour section 10R, and the bottom end screw portions are tightened with nuts 23 a upwards.

Then, a positioning pin 26, which projects from the central part of the upper surface of the central rectangular flat board 21b of the rear bracket 21, is fit in a positioning hole 27, which is drilled through the lower peripheral wall portion of the rear contour section 10R.

In addition, as shown in Fig. 5 and Fig. 6, a front movement check bracket 30, which servers as an accessory member arranged to prevent a vehicle occupant from slipping to front, is installed to the front contour section 10F by the front U bolts 22 upon installing the front legs Lf to the front contour section 10F via these front U bolts 22.

In other words, the front movement check bracket 30 includes an installation section 31, which is bent in the shape of an inverted U character to cover the outer peripheral wall portion 10b, the surface peripheral wall portion 10c, and the inner peripheral wall portion 10a of the front contour section 10F, an extension section 32, which extends from the rear and lower part of the installation section 31 to rear along the board 6, and a slope section 33, which results from bending the rear end portion of the extension section 32 upwardly and to the front. The upper end portion of the slope section 33 is arranged above and near the inner peripheral wall portion 10a.

The front movement check bracket 30 associated with each of front legs Lf can prevent knees of a vehicle occupant from colliding with a front obstacle, for example, the back face of the front seat in the present embodiment, or alleviate shocks at the time of collision by letting the slope section 33 prevent hips from slipping under a lap belt and dragging to move forwardly when the inertia acts on the vehicle occupant wearing a seat belt during frontal end collision of the vehicle.

Therefore, this front movement check function is obtained with a relatively simple constitution at a low price because the front movement check bracket 30 is fixed to the front contour section 10F when the front bracket 81 of each of the front legs Lf is installed to the front contour section 10F by covering the front contour section 10F with the installation section 31 of the front movement check bracket 30, installing the front U bolts 22 to the installation section 31, and tightening the front U bolts 22 with the nuts 22a.

In addition, as shown in Fig. 7 and Fig. 8, hooks 40 used for ISOFIX child seats are installed to the rear contour section 10R upon installing the rear legs Lr to the rear contour section 10R via the rear U bolts 23. ISOFIX stands for "International Standards Organization FIX" and provides an international standard for installing child seats into vehicles. A safety base, not illustrated, is fixed to the hooks 40, and a main body of a child seat is fixed to this safety base.

The hooks 40 are protruding portions of the rear brackets 21, respectively. As readily seen from Fig. 7 and Fig. 8, the hook 40 is a protruding portion from the central rectangular flat board 21 b beyond a line defining a rear edge of the central rectangular flat board 21 b. The hook 40 results from bending this protruding portion at the line defining the rear edge of the central rectangular flat board 21 b through an angle of 90 degrees to form an upright wall 41. The upright wall 41 extends upwardly along the outer peripheral wall portion 10b of the rear contour section 10R. The protruding portion extends beyond the upper edge of the outer peripheral wall portion 10b. At a line slightly higher than the upper edge of the outer peripheral wall portion 10b, the protruding portion is bent forwardly to form a slope section 42. The slope section 42 is formed with an opening 43. From the above-description, it will be appreciated that each of the hooks 40 includes the upright wall 41 and the slope section 42 formed with the opening 43.

Therefore, the hooks 40 are installed to the rear contour section 10R upon installing the rear brackets 21 of the rear leg Lr to the rear contour section 10R via the rear U bolts 23.

According to the present embodiment of seat structure, the framework of the seat cushion 2 and the framework of the seat back 3 are made from the boards 6 and 7, respectively. The board 6 is formed with the portion rolled up 10 on the periphery, and the board 7 the portion rolled up 11 on the periphery. The portion rolled up 10 serves as a frame and secures the required strength as the framework of the seat cushion 2. The portion rolled up 11 serves as a frame and secures the required strength as the framework of the seat back 3. Accordingly, a reduction in weight, an improvement in production efficiency, and a reduction in cost are achieved in rear bench seats 1.

In the present embodiment, accessories such as the front legs Lf and the rear leg Lr are installed to the portion rolled up 10 that has a cross section with a rectangular cross sectional profile as one example of the generally polygonal cross sectional profile. The portion rolled up 10 includes the front contour section 10F and the rear contour section 10R. The front legs Lf are installed to the front contour section 10F, while the rear leg Lr is installed to the rear contour section 10R.

Then, the front legs Lf are installed to the front contour section 10F by fixing the front brackets 81 to the front contour section 10F via the front U bolts 22. Because each of the front U bolts 22 is shaped along the outside shape of the front contour section 10F, each of the front legs Lf is prevented from turning with respect to the front contour section 10F.

In addition, the rear leg Lr is installed to the rear contour section 10R by fixing the rear brackets 21 to the rear contour section 10R via the rear U bolts 23. Because each of the rear U bolts 23 is shaped along the outside shape of the rear contour section 10R, the rear leg Lr is prevented from turning with respect to the rear contour section 10R.

Therefore, it is possible to install the front legs Lf and rear leg Lr to the front contour section 10F and the rear contour section 10R without welding these legs Lf and Lr to the portion roll up 10. It is no longer necessary to provide the portion roll up 10 with reinforced portions for welding. And, it is easy to install the front legs Lf and the rear leg Lr to the portion roll up 10 via the front U bolts 22 and the rear U bolts 23. Accordingly, an improvement in installation work and a reduction in weight are achieved.

In addition, in the present embodiment, accessories in the form of the front movement check brackets 30 are installed to the front contour section 10F, and accessories in the form of the hooks 40 are installed to the rear contour section 10R. The front movement check brackets 30 are fixed to the front contour section 10F together with the front legs Lf via the front U bolts 22. And, the hooks 40 are protruding portions of the rear leg Lr that is fixed to the rear contour section 10R via the rear U bolts 23. Thus, the front movement check brackets 30 and the hooks 40 are fixed to and prevented from turning with respect to the front contour section 10F and the rear contour section 10R. Therefore, it is no longer necessary to welding the front movement check brackets 30 and the hooks 40 to the front contour section 10F and the rear contour section 10R.

Because the hooks 40 are unified with the rear brackets 21 of the rear leg Lr, the rear leg Lr standing on the vehicle floor supports excessive moment occurring when the movement of the child seat to the front acts on the hooks 40. Thus, it is no longer necessary to excessively reinforce the rear contour section 10R and the rear brackets 21.

In addition, the front brackets 81 and the rear brackets 21 are positioned easily relative to the front contour section 10F and the rear contour section 10R by fitting the positioning pins 24 and 26 into the positioning holes 25 and 27. Because the positioning pins 24 and 26 and the positioning holes 25 and 27 support moment acting on the front brackets 81 and the rear brackets 21, the function to prevent the front legs Lf and the rear leg Lr from turning is improved.

### (Second Embodiment)

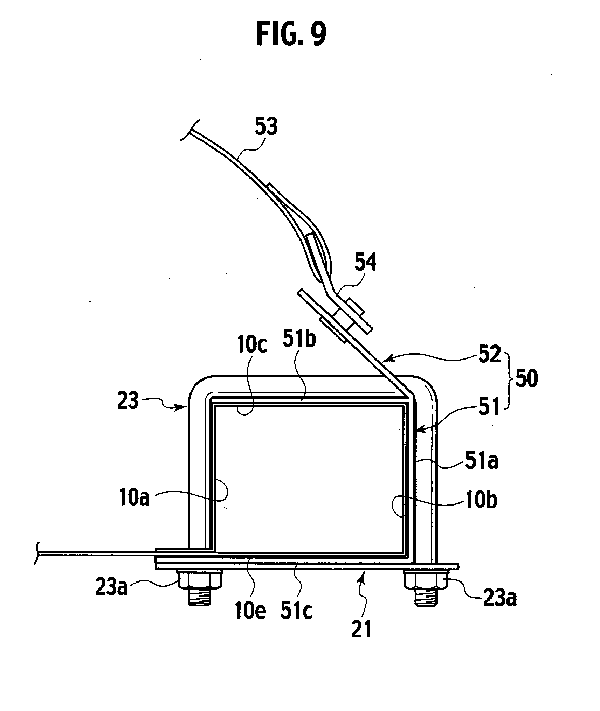

There is description on second embodiment of a seat structure. This embodiment is substantially the same as the first embodiment except the provision of an accessory in the form of a tether belt anchor. Fig. 9 is a cross section similar to Fig. 8, but illustrates an installation of a tether belt anchor. Like reference numerals are used to designate like parts, sections and portions throughout Fig. 1 to Fig. 8 and Fig. 9.

The second embodiment illustrates the case in which an accessory in the form of a tether belt anchor 50 for a tether belt of an ISOFIX child seat is installed to a rear contour section 10R. A rear bracket 21 of a rear leg Lr and the tether belt anchor 50 are tightened together by rear U bolts 23.

As shown in Fig. 9, the tether belt anchor 50 includes an installation section 51, which is bent to form a back 51 a, a top 51 b, and a bottom 51c covering an outer peripheral wall portion 10b, a surface peripheral wall portion 10c, and a back peripheral wall portion 10e of the rear contour section 10R, and an anchor section 52, which protrudes from an upper end of a central portion of the back 51a upwardly and to the front. The rear bracket 21 of the rear leg Lr and the both end portions of the installation section 51 are tightened together by the rear U bolts 23.

The anchor section 52 has a fitting 54 connecting an installation belt 53 of a buckle for selectively engagement with a tongue of a tether belt.

In the present embodiment, the tether belt anchor 50 is installed using the rear U bolts 23, each being of the shape along the outside shape of the rear contour section 10R. The tether belt anchor 50 is fixed to and prevented from turning with respect to the rear contour section 10R because the rear contour section 10R has a cross section with a rectangular cross sectional profile. Therefore, it is no longer necessary to weld the tether belt anchor 50 to the rear contour section 10R.

### (Third Embodiment)

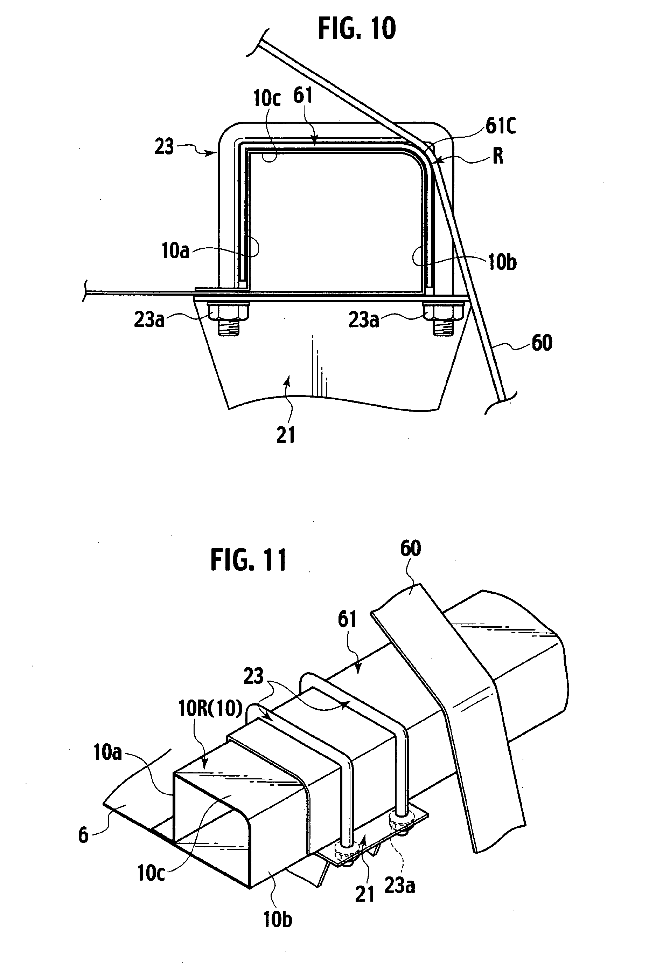

There is description on third embodiment of a seat structure. This embodiment is substantially the same as the first embodiment except the provision of an accessory in the form of a belt guide 61. Fig. 10 is a cross section similar to Fig. 8, but illustrates an installation of the belt guide 61. Fig. 11 is a perspective view illustrating the installation of the belt guide 61. Like reference numerals are used to designate like parts, sections and portions throughout Fig. 1 to Fig. 8 and Fig. 10 and Fig. 11.

The present embodiment of seat structure comprises an accessory in the form of the belt guide 61. Referring to Fig. 10 and Fig. 11, the reference numeral 60 indicates an installation belt extending from a safety base, not illustrated, for a child seat when this belt 60 is plugged into an anchor, not illustrated, installed to a lower part of a rear leg Lr. The belt guide 61 is installed to that area portion of a rear contour section 10R of a board for a seat cushion 2 which the belt 60 contacts with.

This belt guide 61 is bent in the shape of an inverted U character to cover an outer peripheral wall portion 10b, a surface peripheral wall portion 10c, and an inner peripheral wall portion 10a of the rear contour section 10R. The belt guide 61 is put to cover the rear contour section 10R from the surface peripheral wall portion 10c and tightened together with a rear bracket 21 of a rear leg Lr by rear U bolts 23.

Then, as shown in Fig. 10, the rear corner portion 61C of the belt guide 61 which is contacted by the belt 60 has an arc side R together with the corner portion of the rear contour section 10R.

In the present embodiment, the belt guide 61 is installed using the rear U bolts 23, each being of the shape along the outside shape of the rear contour section 10R. The belt guide 61 is fixed without welding it to the rear contour section 10R. With this belt guide 61, an input via the area the belt 60 contacts with the rear contour section 10R is alleviated and the rear contour section 10R is reinforced.

### (Fourth Embodiment)

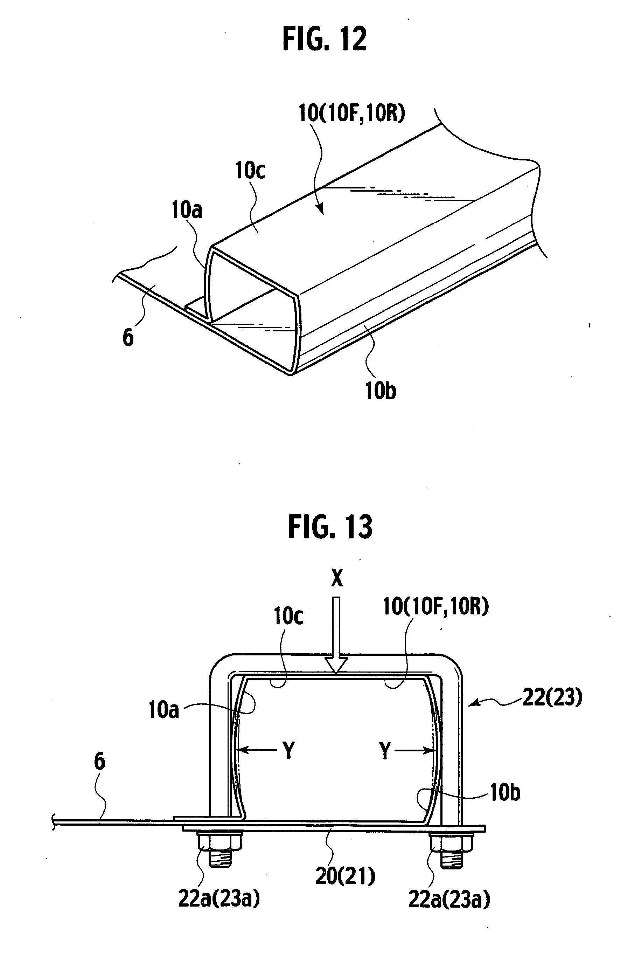

Referring to Fig. 12 and Fig. 13, there is description on fourth embodiment of seat structure. This embodiment is substantially the same as the first embodiment. Like reference numerals are used to designate like parts, sections and portions throughout Fig. 1 to Fig. 8 and Fig. 12 and Fig. 13.

In the first embodiment, the front leg Lf and the rear leg Lr are fixed to the portion rolled up 10 (the front contour section 10F, the rear contour section 10R) via the rear U bolts 23. In contrast, in the fourth embodiment, as shown in Fig. 12, an inner peripheral wall portion 10a and an outer peripheral wall portion 10b, via which the portion rolled up 10 is to contact with the associated U bolt 22 or 23, are formed to swell out beforehand. As shown in Fig. 13, when the portion rolled up 10 is tightened by U bolts 22 or 23 and compressed as indicated by a big arrow X, the inner and outer peripheral wall portions 10a and 10b swell out further into firm engagement with the inside of the U bolts 22 or 23 as indicated by two small arrows Y, causing outbreak of reaction.

According to the third embodiment, tightening of the U bolts 22 or 23 adheres the inner and outer peripheral wall portions 10a and 10b to the inside of the U bolts 22 or 23, thereby increasing coupling force between the front and rear brackets 81, 21 and the portion rolled up 10 and increasing the fixed force of the front leg Lf and rear leg Lr.

In addition, because the inner and outer peripheral wall portions 10a and 10b of the portion rolled up 10 are pressed into firm engagement with the U bolts 22 or 23, the fixed power of the front movement check brackets 30 (see Fig. 5), the hooks 40 (see Fig. 7), the tether anchors 50 (see Fig. 9), and the belt guide 61 (see Fig. 11) may be increased.

### (Fifth Embodiment)

Referring to Fig. 1 to Fig 4 and Fig. 14 to Fig. 16, there is description on fifth embodiment of seat structure. This embodiment is substantially the same as the first embodiment. Like reference numerals are used to designate like parts, sections and portions throughout Fig. 1 to Fig. 4 and Fig. 14 to Fig. 16.

Referring to Fig. 2, in the present embodiment, a portion rolled up 10 and a portion rolled up 11 have a cross section with a polygonal cross sectional profile. It is desired that the cross sectional profiles of these portions rolled up 10 and 11 be chosen so that at least one of an inner peripheral wall portion 10a or 11a and an outer peripheral wall portion 10b or 11b may be generally perpendicular to a flat portion of a board 6 or 7. In this embodiment, all of the inner and outer peripheral wall portions 10a, 11a, 10b, and 11b are generally perpendicular to the flat portions of the boards 6 and 7.

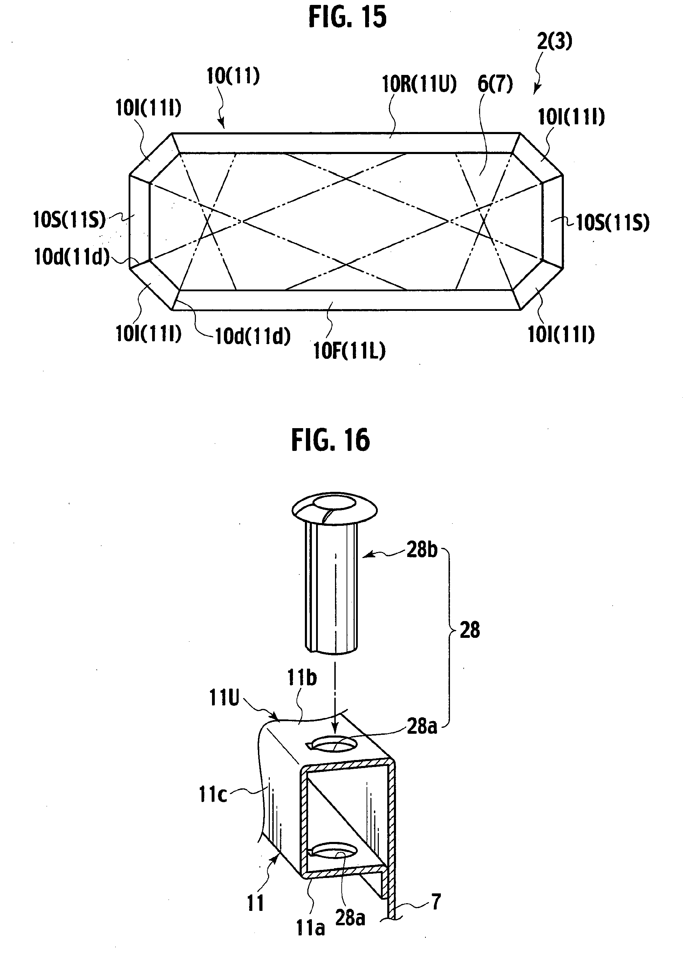

As shown in Fig. 15, in the board 6 for the seat cushion 2, the front contour section 10F and the rear contour section 10R are in parallel and opposed to each other, and two side contour sections 10S and 10S are in parallel and opposed to each other. In order to prevent the board 6 from being twisted, two planes in which end faces 10d of the front contour section 10F are located are out of (do not overlap with) two planes in which end faces 10d of the rear contour section 10R are located as shown by the phantom lines. Moreover, two planes in which end faces 10d of the side contour section 10S on the right are located are out of (do not overlap with) two planes in which end faces 10d of the side contour section 10S on the left are located as shown by the phantom lines.

The same applies in the board 7. In the board 7 for the seat back 3, the upper contour section 11U and the lower contour section 11L are in parallel and opposed to each other, and two side contour sections 11S and 11S are in parallel and opposed to each other. In order to prevent the board 7 from being twisted, two planes in which end faces 11d of the upper contour section 11U are located are out of (do not overlap with) two planes in which end faces 11d of the lower contour section 11 L are located as shown by the phantom lines. Moreover, two planes in which end faces 11d of the side contour section 11S on the right are located are out of (do not overlap with) two planes in which end faces 11d of the side contour section 11S on the left are located as shown by the phantom lines.

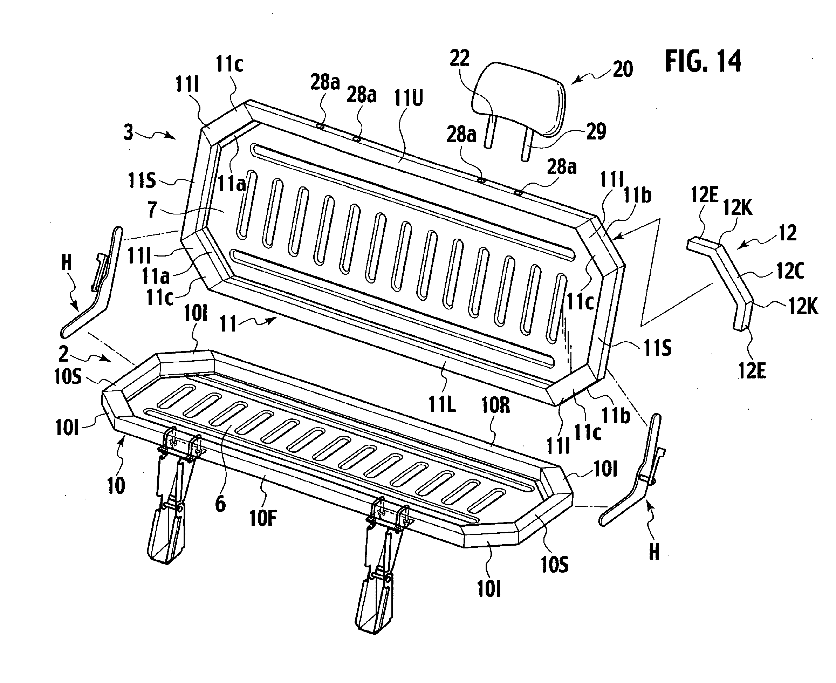

In addition, referring to Fig. 14, each of corners of the portion rolled up 11 of the board 7 for the seat back 3, that is, each of the slanting contour sections 11I of the portion rolled up 11, in this embodiment, is covered with a cover member 12.

As shown in Fig. 14, the cover member 12 has a cross section with an L character cross sectional profile to cover a surface peripheral wall portion 11c and an outer peripheral wall portion 11b. The cover member 12 includes a central section 12C and two end sections 12E. The central section 12C covers the slanting contour section 11I. When the slanting contour section 11I is disposed between the upper contour section 11U and the side contour section 11S, one of the end sections 12E covers the seam (comer) between the upper contour section 11U and the slanting contour section 11I, and the other end section 12E covers the seam (comer) between the slanting contour section 11I and the side contour section 11S. When the slanting contour section 11I is disposed between the side contour section 11S and the lower contour section 11L, one of the end sections 12E covers the seam (comer) between the side contour section 11S and the slanting contour section 111, and the other end section 12E covers the seam (comer) between the slanting contour section 11I and the lower contour section 11L. In this way, exposure of the seams is prevented.

In this embodiment, outside corners 12K of each cover member 12 have an arc side, for example, an arc side having a diameter greater than or equal to 5 mm. Of course, each of slanting contour sections 10I of the board 6 for the seat cushion 2 may be covered with a cover member of the similar construction.

Referring to Fig. 14 to Fig. 16, the upper contour section 11 U of the board 7 for the seat back 3 is formed with headrest holders 28 for mounting headrests 20.

In other words, as shown in Fig. 14, the headrest 20 has a pair of stays 29. As shown in Fig. 16, the headrest holder 28 has installation holes 28a drilled through the outer and inner peripheral wall portions 11b and 11a of the upper contour section 11U and holder main bodies 28b fitted into the installation holes 28a for insertion and locking of the stays 29.

According to the present embodiment of seat structure, the framework of the seat cushion 2 and the framework of the seat back 3 are made from the boards 6 and 7, respectively. The board 6 is formed with the portion rolled up 10 on the periphery, and the board 7 the portion rolled up 11 on the periphery. The portion rolled up 10 serves as a frame and secures the required strength as the framework of the seat cushion 2. The portion rolled up 11 serves as a frame and secures the required strength as the framework of the seat back 3. Accordingly, a reduction in weight, an improvement in production efficiency, and a reduction in cost are achieved in rear bench seats 1.

Because, with this embodiment, the portion rolled up 10 or 11 has a polygonal cross sectional profile, when the pad 4 or 5 tends to slip on the board 6 or 7, the groove 4a or 5a of the pad 4 or 5 raises its firm engagement with the peripheral wall portions (10b, 10c and 10a; or 11b, 11c and 11a) of the portion rolled up 10 or 11, preventing a slippage between the pad 4 or 5 and the board 6 or 7. On this account, the pad 4 or 5 is prevented from slipping sidewise and rubbing against the board, controlling outbreak of abnormal noise, providing a seat of high value.

Then, the cross sectional profiles of these portions rolled up 10 and 11 are chosen so that at least one of an inner peripheral wall portion 10a or 11a and an outer peripheral wall portion 10b or 11b may be generally perpendicular to a flat portion of the board 6 or 7. Engagement between the grooves 4a, 5a and the portions rolled up 10, 11 are further raised in degree.

In this embodiment, all of the inner and outer peripheral wall portions 10a, 11a, 10b, and 11b are generally perpendicular to the flat portions of the boards 6 and 7. Thus, the inner and outer peripheral wall portions 10a and 10b of the portion rolled up 10 and the inner and outer peripheral wall portions 11a and 11b of the portion rolled up 11 surely retain the grooves 4a and 5a. Outbreak of abnormal noise is controlled by surely preventing sidewise slip of the pads 4 and 5. It is no longer necessary to arrange separate means for restraining movement of the pads 4 and 5, such as pasting, making a reduction in cost possible.

Each of these portions rolled up 10 and 11 results by bending the board 6 or 7 to form sides of a rectangular cross section one after another at every one of predetermined inward lines from the outer extremity. Welding work needed if they are separately formed is not needed, improving time and work for forming the portions rolled up 10 and 11. Required hardness and strength are secured without changing the thickness of the portions rolled up 10 and 11, making it possible to provide a structure that is light in weight but high in hardness and strength.

Hardness and strength of the seat back 3 and seat cushion 2 are raised because the portion rolled up 11 is formed over the whole periphery of the board 7 and the portion rolled up 10 is formed over the whole periphery of the board 6.

The upper edge of the portion roll up 11 (the upper contour section 11U) is formed with the headrest holder 28 for the headrest 20. Installing the headrest 20 by making a good use of the portion rolled up 11 simplifies the frame structure of the seat back 3.

External appearance of the portions rolled up 10 and 11 is improved because all of the contour sections of the portions rolled up 10 and 11 connect smoothly one after another without any overlap doe to the provision of generally V character cuts Vc. For the seat cushion 2, the board 6 is formed with generally V character cuts Vc, one between the area portion which will form each of slanting contour sections 10I and the adjacent area portion which will form the adjacent one of side contour sections 10S, another between the area portion which will form each of slanting contour sections 10I and the adjacent area portion which will form the adjacent one of the front and rear contour sections 10F and 10R. For the seat back 3, the board 7 is formed with generally V character cuts Vc, one between the area portion which will form each of slanting contour sections 11I and the adjacent area portion which will form the adjacent one of side contour sections 11S, another between the area portion which will form each of slanting contour sections 11I and the adjacent area portion which will form the adjacent one of the upper and lower contour sections 11U and 11L.

As described before in connection with Fig. 15, the board 6 is prevented from being twisted by locating two planes in which end faces 10d of the front contour section 10F are out of two planes in which end faces 10d of the rear contour section 10R are located. The board 7 is prevented from being twisted by locating two planes in which end faces 11d of the upper contour section 11 U are out of two planes in which end faces 11d of the lower contour section 11L are located.

Furthermore, those sections of the portion rolled up 10 or 11 which correspond to the corners of the board 6 or 7 are covered with the cover members 12. In particular, in the present embodiment, the cover members 12 cover the slanting contour sections 11I of the board 7 for the seat back 3, and gaps, each between the two adjacent contour sections of the portion rolled up 11, raising hardness of the corners of the board 7, eliminating catches by the gaps. The same technical effect is given by covering the slanting contour sections 10I of the board 6 for the seat cushion 2.

Furthermore, outside corners 12K of each cover member 12 has an arc side, eliminating catches by providing smooth outside surface.

In the preceding embodiments, the portion rolled up 10 or 11 has a common cross sectional area and profile. Cross sectional area may be increased gradually in the shape of a taper toward the part that big hardness is demanded. For example, cross sectional area of both of the side contour sections 10S or 11S may be increased gradually in the shape of a taper toward the hinge portion H.

### (Sixth Embodiment)

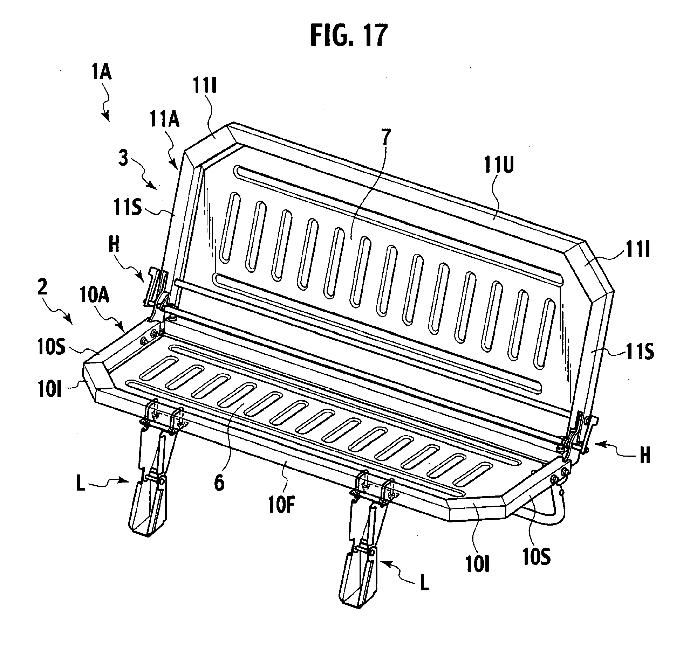

Referring to Fig. 1 to Fig. 4 and Fig. 17, there is description on sixth embodiment of seat structure. This embodiment is substantially the same as the fifth embodiment. Like reference numerals are used to designate like parts, sections and portions throughout Fig. 1 to Fig. 4, Fig. 14 to Fig. 16, and Fig. 17. Fig. 17 is a perspective view of a seat structure with the pads 4, 5 removed to illustrate a frame structure.

In Fig. 17, the reference numeral 1A indicates a rear bench seat. The rear bench seat 1A is substantially the same as the rear bench seats 1 illustrated in Fig. 1 to Fig. 4 and Fig. 14 to Fig. 16. Thus, a board 6 of a seat cushion 2 includes a portion rolled up 10A, and a board 7 of a seat back 3 includes a portion rolled up 11A.

The present embodiment is different from the fifth embodiment in that the portion rolled up 10A is not arranged at the whole periphery of the board 6 of the seat cushion 2, and the portion rolled up 11A is not arranged at the whole periphery of the board 7 of the seat back 3. In other words, the portion rolled up 10A is not arranged on the rear section of the periphery or the side of a hinge H, and the portion rolled up 11A is not arranged on the lower section of the periphery or the side of the hinge H. The portion rolled up 10A is not ringed, but it is in the shape of U character opening at the rear section of the periphery of the board 6 of the seat cushion 2. The portion rolled 11A is not ringed, but it is in the shape of U character opening at the lower section of the periphery of the board 7 of the seat back 3.

In other words, the portion rolled up 10A of the seat cushion 2 excludes a rear contour section 10R shown in Fig. 1 and Fig. 14, but it includes a front contour section 10F, two side contour sections 10S and two slanting contour sections 10I, which are connected one after another to make the shape of U character opening at the rear section of the periphery of the board 6. The portion rolled up 11A of the seat back 3 excludes a lower contour section 11L shown in Fig. 1 and Fig. 14, but it includes an upper contour section 11U, two side contour sections 11S and two slanting contour sections 11I, which are connected one after another to make the shape of U character opening at the lower section of the periphery of the board 7. In addition, the boards 6 and 7 are raised in surface hardness by giving embossing appropriately.

As best seen in Fig. 17, the side contour sections 10S of the seat cushion 2 are connected via the two hinges H to the side contour sections 11S of the seat back 3.

In the present embodiment, the portion rolled up 10A of the seat cushion 2 and the portion rolled up 11A of the seat back 3 would be left separated if the hinges H were not regarded as power transmitting devices. But, the hinges H are power transmitting devices between the side contour sections 10S of the seat cushion 2 and the side contour sections 11S of the seat back 3. The open side of the portion rolled up 10A of the seat cushion 2 is supported via the hinges H by the portion rolled up 11A of the seat back 3, and at the same time, the open side of the portion rolled up 11A of the seat back 3 is supported via the hinges H by the portion rolled up 10A of the seat cushion 2. Therefore, without any considerable drop in hardness, any input of load to the seat cushion 2 and seat back 3 can be supported. Not only this technical effect but a reduction in weight of the rear bench seat 1A is another technical effect.

Of course, in the present embodiment, in a similar manner to the preceding embodiments, grooves 4a and 5a of pads 4 and 5 cover the portions rolled up 10A and 11A (see Fig. 2), and the portions rolled up 10A and 11A have a rectangular cross sectional profile. The portions rolled up 10A and 11A may be formed in the same manner described and illustrated in Fig. 3A to Fig. 3G.

The above explanation is one example. It is, therefore, not intended that the present invention is limited to the above description. For example, the present invention is applicable to a seat for one people and seats are not limited to vehicle seats even though, in the preceding description, bench seats for a plurality of people are illustrated.

In the drawings and specification, there have been disclosed typical preferred exemplary embodiments of the invention and, although specific terms are employed, they are used in a generic and descriptive sense only and not for the purpose of limitation, the scope of the invention being set forth in the following claims.

## Claims

1. A seat structure comprising:
a board (6, 7) that has a portion rolled up (10, 10A, 11, 11A) on a periphery of the board (6, 7), said portion rolled up (10, 10A, 11, 11 A) having a closed cross section with a generally polygonal cross sectional profile.

2. The seat structure as claimed in claim 1, further comprising:
a peripheral (4, 5, 30, [L, Lf, Lr], 40, 50, 61) installed to said portion rolled up (10, 10A, 11, 11A).

3. The seat structure as claimed in claim 2, wherein
said peripheral (30, [Lf, Lr], 40, 50, 61) includes an accessory (30, [Lf, Lr], 40, 50, 61).

4. The seat structure as claimed in claim 3, further comprising:
an installation member (22, 23) having a shape along said portion rolled up (10, 11) and installing said accessory (30, [Lf, Lr], 40, 50, 61) to said portion rolled up (10, 11).

5. The seat structure as claimed in claim 4, wherein
said installation member (22, 23) is a U bolt (22, 23) surrounding said portion rolled up (10, 11).

6. The seat structure as claimed in claim 5, wherein
said portion rolled up (10, 11) are formed beforehand to swell out so that it swells out further into engagement with said U bolt when compressed by said U bolt (22, 23) upon tightening said U bolt (22, 23).

7. The seat structure as claimed in claim 3, wherein
said accessory (30) includes a front movement check bracket (30), said front movement check bracket (30) including a slope section (33).

8. The seat structure as claimed in claim 3, wherein
said accessory (30, [L, Lf, Lr], 40, 50, 61) includes a hook (40), a tether belt anchor (50), a belt guide (61), a front leg (Lf) and a rear leg (Lr).

9. The seat structure as claimed in claim 2, wherein
said peripheral (4, 5) includes a pad (4, 5) formed with a groove (4a, 5a) receiving said portion rolled up (10, 10A, 11, 11A).

10. The seat structure as claimed in claim 9, wherein
said portion rolled up (10, 10A, 11, 11A) includes an inner peripheral wall portion (10a, 11a) and an outer peripheral wall portion (10b, 11b), at least one of which {(10a, 11a), (10b, 11b)} is perpendicular to a flat portion of said board (6, 7).

11. The seat structure as claimed in claim 2, wherein
said polygonal cross sectional profile is a rectangular cross sectional profile.

12. The seat structure as claimed in claim 2, wherein
said portion rolled up (10, 10A, 11, 11A) results from repeating bending said board (6, 7) to form sides of said generally polygonal cross sectional profile one after another.

13. The seat structure as claimed in claim 2, wherein
said portion rolled up (10, 11) is on whole the periphery of said board (6, 7).

14. The seat structure as claimed in claim 2, wherein
said portion rolled up (11) includes an upper contour section (11U) formed with a headrest holder (28).

15. The seat structure as claimed in claim 2, wherein
said portion rolled up (10, 10A, 11, 11A) includes a contour section (10F, 10I, 10R, 20S, 11I, 11L, 11S, 11U) having end faces formed by V character cuts (Vc) into said board (6, 7) from its edge.

16. The seat structure as claimed in claim 2, wherein
said portion rolled up (10, 11) includes parallel contour sections {(10F, 10R), (10S, 10S), (10I, 10I), (11L, 11U), (11S, 11S), (11I, 11I)} having end faces (10d, 11d), the end faces (10d, 11 d) of one contour section (10F, 10S, 10I, 11L, 11S, 11I) being located in two planes that are out of two planes in which the end faces (10d, 11d) of the other contour section (10R, 10S, 10I, 11U, 11S, 11I) are located.

17. The seat structure as claimed in claim 2, wherein
said portion rolled up (10, 11) is covered with cover members (12) at corner portions of said board (6, 7).

18. The seat structure as claimed in claim 17, wherein
each of said cover members (12) has an arc side (12K) on its outside corner (12K).
